Europäisches Patentamt

(19) European Patent Office

Office européen des brevets

(11) Publication number: **0 050 902**
**B1**

(12) **EUROPEAN PATENT SPECIFICATION**

(45) Date of publication of patent specification: **23.05.84**

(21) Application number: **81201178.1**

(22) Date of filing: **24.10.81**

(51) Int. Cl.³: **C 01 B 33/16,** B 01 J 21/08,
B 01 J 23/26, C 08 F 10/02,
C 08 F 4/02, C 08 F 4/62

(54) The preparation of porous, pure silicon dioxide and of chromium-oxide-on-silicon dioxide catalysts.

(30) Priority: **24.10.80 NL 8005856**

(43) Date of publication of application:
**05.05.82 Bulletin 82/18**

(45) Publication of the grant of the patent:
**23.05.84 Bulletin 84/21**

(84) Designated Contracting States:
**AT BE DE FR GB IT NL SE**

(56) References cited:
**FR-A-2 323 706**
**GB-A-2 001 044**
**US-A-2 475 984**

(73) Proprietor: **STAMICARBON B.V.**
**Postbus 10**
**NL-6160 MC Geleen (NL)**

(72) Inventor: **Scholten, Joseph Johannes**
**Franciscus**
**Sartonlaan 7**
**NL-6132 BC Sittard (NL)**
Inventor: **Van Montfoort, Abraham**
**Pieterstraat 53**
**NL-6166 AP Geleen (NL)**
Inventor: **Van de Leemput, Lambertus**
**Johannes Maria**
**Imkerstraat 16**
**NL-6101 GW Echt (NL)**
Inventor: **Nooijen, Godefridus Arnoldus**
**Henricus**
**Gouv. Houbenstraat 16**
**NL-5981 BL Helden-Panningen (NL)**

(74) Representative: **De Boer, Jan et al**
**OCTROOIBUREAU DSM Postbus 9**
**NL-6160 MA Geleen (NL)**

Courier Press, Leamington Spa, England.

## Description

The invention relates to a process for the preparation of porous, pure silicon dioxide by converting a silicon dioxide prepared by flame hydrolysis into a gel, using at least the same quantity by weight of water, and spray-drying the gel.

Such a process is known from Dutch patent application NL—A—78 07220. The silicon dioxides obtained by that process are very suitable as carriers for chromium oxide catalysts for the polymerisation of olefins, in particular of ethylene. Chromium oxide catalysts on such silicon dioxides have a good activity. They are suitable especially for the polymerisation of ethylene by a solution process, for when polymerisation is effected by a suspension process, for which temperatures below 105°C are used, polymers having very high molecular weights are formed. It is true that such catalysts are sensitive to hydrogen, so that the molecular weight can be reduced by adding hydrogen, but the presence of hydrogen results in decreased activity. For sufficient reduction of the very high molecular weight, large amounts of hydrogen are to be mixed with the ethylene, resulting in a significant decrease in activity. Such a decrease in activity is undesirable. In addition, recirculation of hydrogen with unconverted ethylene, solvent vapour and possibly comonomers and separation thereof into the components becomes more expensive with increases in the amount of hydrogen. In view of this it is desirable that when applying suspension polymerisation, i.e. when using temperatures below 105°C, the molecular weights of the ethylene polymers are not unduly high, so that conventional polyethylene types can be produced without hydrogen or with addition of only limited amounts of hydrogen.

It has now been found that catalysts satisfying this requirement can be obtained by applying a new silicon dioxide. Such a silicon dioxide is prepared by converting a silicon dioxide obtained by flame hydrolysis into a gel, using at least the same quantity by weight of water, and spray-drying the gel, the gel to be spray-dried being mixed—and this characterizes the invention—with at least 15 vol.% of an alcohol with 1—5 carbon atoms, calculated in relation to the volume of the water in the gel, and the mixture thus obtained being spray-dried. By preference the gel is mixed with at least 20 vol.% of alcohol.

In Dutch patent application 78,07220 it is already explained that for catalysts of the chromium-oxide-on-carrier type the silicon dioxide carrier is to have a certain porosity which is to be retained wholly or largely upon heating of the carrier. The silicon dioxides described in said application have a large pore volume. It has, however, been found that silica gels prepared from a silicon dioxide, obtained by flame hydrolysis, having a larger surface do not have a satisfactory pore volume. When preparing catalyst carriers it is desirable to start from silicon dioxide, obtained by flame hydrolysis, that has a large surface. It is true that the surface of a silica gel generally is smaller than that of the silicon dioxide from which it is prepared, but on the other hand the surface of the silica gel is found to increase with the surface of the starting material. When the silica gel carrier has a large surface, the load with, for instance, a chromium oxide catalyst can be larger than on a carrier with a smaller surface, the high catalyst dispersion being retained. This results in a greater activity per gramme of catalyst.

Some known commercially available silicon dioxides prepared by flame hydrolysis have surfaces of 130, 200 and 380 $m^2$/g, though of course other types are also available. Especially silica gels prepared on the basis of silicon dioxide having a surface of 380 $m^2$/g are found to have a larger pore volume when prepared according to the subject invention than when no mixing with alcohol takes place prior to spray-drying. The pore volume of silica gels prepared according to the subject invention is at least 1.0 $cm^3$/g and by preference at least 1.5 $cm^3$/g.

The conversion of a silicon dioxide prepared by flame hyrolysis into a gel with the aid of water can be effected in various ways. The silicon dioxide can be ground or stirred with water, both at ambient temperatures and at increased temperatures, up to about 100°C, but also under pressure at higher temperatures, for instance up to 300°C. This can even be done under supercritical conditions.

By preference the ground or stirred mixture is allowed to stand for some time, generally at least some hours. Longer ageing times, from some days to some months, may still have a favourable effect on the formation of the gel and especially on the strength of the final product. By preference ageing of the gel takes place at increased temperatures, and then ageing times of less than 24 hours usually are sufficient, though longer ageing times may in some cases be desirable. Temperatures of up to about 100°C are very suitable, but under pressure, again, considerably higher and even supercritical temperatures can be applied. The amount of water is at least 50 wt.%, calculated in relation to the silicon dioxide plus the water. Concentrations of 10—20 wt.%, calculated in relation to the mixture, are very suitable; at such concentrations the amount of water used thus is 4 to 8 times as large as the amount of silicon dioxide. Of course larger amounts of water may be used to form a gel, but these are uneconomic in spray-drying, the more so as the gel is further mixed with at least 15 vol.% and preferably at least 20 vol.% of an alcohol with 1—5 carbon atoms. For economic reasons the amount of water used for the preparation of the gel will be kept as small as possible so as to reduce the alcohol consumption to a minimum.

To silica gel obtained by mixing silicon dioxide with water and, optionally, subsequent ageing of the mixture, at least 15 vol.% and by preference at least 20 vol.%, calculated in relation to the water in the gel, of an alcohol with 1—5 carbon atoms is added. By preference methanol or ethanol is used. The alcohol must be well miscible with water, and therefore higher alcohols, the miscibility with water of which decreases rapidly with increases in the number of carbon atoms, are not or not very suitable.

The gel is to be mixed intimately with the alcohol until a homogeneous mass is obtained. Mixing can be effected in a vessel with a high rpm stirrer, or with a homogenizer, for instance of the Ultraturrax type, or by any other suitable method for mixing high-viscosity with low-visocity materials. When the water content of the gel is not very high the gel generally is a viscous, jellylike mass with a viscosity generally exceeding 1000 cP (1 Pa.s), whereas the viscosity of alcohols at room temperature is on the order of 1 cP (1mPa.s). In view of this, careful mixing is a requirement. Thus an alcohol-containing gel is obtained, which is subsequently spray-dried. The amount of alcohol, calculated in relation to the amount of water in the gel, should be at least 15 vol.% and preferably at least 20 vol.%.

Gels containing smaller amounts of alcohol can of course also be spray-dried with good results, spray-drying of a gel without alcohol also being known, but at amounts smaller than 15 vol.% the above-mentioned effect, that in suspension polymerisations of ethylene chromium-oxide-on-carrier catalysts on such silicon dioxides produce a polyethylene with a reasonable molecular weight and, in addition, react satisfactorily to addition of hydrogen, is found to occur to a markedly lesser extent. Moreover, the pore volume, especially of silica with a large surface, then becomes smaller.

It is not quite clear what causes these effects. It is assumed, though this cannot be regarded as a statement binding the applicant, that the surface tension of the water-alcohol mixture plays a part in that it influences the structure, the surface and the pore volume of the silica gel obtained. At 15 vol.%, and in particular at 20 vol.% or more, of alcohol the surface tension already is substantially smaller than that of water. Ethanol decreases the surface tension further than does methanol, and for that reason ethanol is particularly preferred. At higher alcohol contents the surface tension does decrease ever further, but the properties of the silica gel improve only little further.

There are no objections to using larger amounts of alcohol, up to 100 vol.%. The water in the silica gel may even be replaced wholly or largely by alcohol. In that case the subject process can still be applied and the said advantages are still obtained, but for economic reasons the amounts of alcohol used will not be chosen too large, and certainly not considerably larger than is necessary. Partly because of the fire hazard, which increases with the amount of alcohol, by preference not more than 100 vol.%, and more particularly not more than 50 vol.% of alcohol will be added. The amounts of alcohol are always taken in relation to the water volume in the gel.

It has further been found that the acidity of the silica gel may also influence the gel properties, its processability and the final properties of the spray-dried silica gel, in particular its strength. It is true that a silica gel can be prepared from a silicon dioxide, obtained by flame hydrolysis, and water at varying acidities, both in an acid environment, i.e. at a pH of 5 or less, and in an alkaline environment, i.e. at a pH of 7 or more, but the best results are obtained by preparing the silica gel in a weakly acid environment at a pH of 4 or less, preferably at a pH of 1.5—3, and more in particular at a pH of 2.5—3, then mixing the gel with the alcohol, and subsequently spray-drying it.

Upon ageing of the gel, usually a fairly solid gel is formed. Mixing of this gel with alcohol is found to become ever more difficult at a pH of 4 or higher, in particular at a pH of approximately 5, necessitating ever longer and ever more careful mixing. The gel can be given better processing properties by adding more water, but this is not very desirable from an economic point of view, for it implies that larger amounts of alcohol are to be used. For the properties of the final product, especially the strength of the gel particles, high pH values are somewhat less favourable, though they can well be used. On the other hand the strength of the spray-dried silica gel particles is also found to decrease somewhat at a pH of less than 2.5, though silica particles prepared at a pH of less than 2.5 can also be used for the preparation of catalysts of the chromium-oxide-on-carrier type. The desired pH can be set by adding slight amounts of acid, e.g. hydrochloric acid or nitric acid, or base, e.g. ammonia or alkali hydroxide. By preference the desired pH is set before or during the mixing with water, but it is also possible to set the pH during the mixing with alcohol.

The subject silicon dioxides are described here in particular as carriers for catalysts of the chromium-oxide-on-carrier type. It will, however, no doubt be obvious that their application is not limited thereto. The subject silicon dioxides are very suitable as carriers for any catalyst and for any other purposes for which the use of a high-porosity silicon dioxide is desired.

Catalysts on a carrier mostly need to have a certain minimum particle size, in particular when they are to catalyze a reaction in a fluidized bed. The so-called activation of chromium-oxide-on-carrier catalysts, i.e. heating in a non-reducing or oxidizing atmosphere, is often carried out in a fluidized bed. In polymerisations the particle size of the catalyst influences the particle size of the polymer. When transported, handled and processed, fine polymer presents dusting problems, which become more serious as the polymer becomes finer. For this reason and for the other reasons mentioned earlier, the carrier is to have an average particle size of at least 0.01 mm and by preference of at least 0.04 mm, and more particularly of at least 0.08 mm. Too coarse particles are not very desirable, either. The average particle size preferably is at most 0.25 mm, and more particularly at most 0.20 mm.

In connection with the powder properties of the polymer, it is desirable for the particle size distribution of the polymer to be narrow, which means that the uniformity factor n according to Rosin-Rammler is at least 2. To obtain such polymer powders, the uniformity factor of the carrier also has to be at least 2. The average particle size and particle size distribution are determined by screen analysis in a way known per se. The results of the screen analysis can be expressed graphically in a Rosin-Rammler net. The point of this line that corresponds to a screen residue of 36.8% gives the average particle size. The slope of the line is a measure of the width of the particle size distribution. The uniformity factor n increases and the particle size distribution narrows with increasing slopes. The uniformity factor by preference is at least 2 and more in particular at least 3.

Spray-drying of diverse materials is generally known. Various types of spray-drying installations have been developed. A survey of these is given by K. Kröll in 'Trocknungstechnik', part 2: 'Trockner und Trocknungsverfahren', Springer Verlag 1959, pages 303—32. The average diameter of the droplets atomized in a spray-drying installation is a function of the surface tension, the density and the viscosity and of the outflow velocity and angle of outflow from the atomizer. By adjustment thereof a spray-dried product having a certain particle size can be obtained. In the art of spray-drying it is also known how to choose the conditions required for the preparation of particles with a narrow particle size distribution. These are preferably chosen so that a silica gel with a uniformity factor of at least 2, and preferably at least 3 is obtained.

Spray-drying of the gel can be effected in an installation generally used for the purpose, in which the gel is atomized by a conventional spray nozzle. Spray-drying installations always use heated air. In the subject process the temperatures of the air blown in generally do not exceed 400°C. Higher temperatures are possible, but for economic and practical reasons they are seldom applied. By preference the temperature of the air blown in is at most 250°C. As a matter of course spray-drying may also be effected in other atmospheres, but the economic disadvantages of the use of large amounts of, for instance, nitrogen, carbon dioxide, carbon monoxide, oxygen, etc. render this unattractive.

It is generally not necessary to spray-dry in an inert atmosphere. At a temperature of the air blown in of at most 250°C the amount of spray-drying air is so large in relation to the evaporating amounts of water and alcohol that the amount of alcohol vapour formed remains well below the lower explosion limit, even when the alcohol content of the silica gel, calculated in relation to the amount of water, exceeds 20 vol.% and is, for instance, 100 vol.%.

Agglomeration aids such as ammonia, sodium hydroxide or other bases may also be added to the gel. The amounts of sodium hydroxide are chosen so that the sodium content of the carrier increases by less than 100 ppm (parts per million) of sodium. Upon heating, the silica gels are more sensitive to added sodium than to sodium that is already present. In view of this, ammonia is preferably used as agglomeration aid.

The mechanical strength of the silica gel particles obtained by spray-drying is of importance in the preparation of catalysts of the chromium oxide type. As already stated, the silica carrier is, after having been impregnated with a chromium compound, heated at temperatures of 400—1000°C in a non-reducing atmosphere. The most practical embodiment is the heating in a fluidized bed. If the mechanical strength of the silica gel particles is insufficient, however, a high degree of abrasion and pulverization occurs. The fine particles are blown out of the fluidized bed and large amounts of catalyst-on-carrier are lost. By adding agglomeration aid when preparing the gel and by choosing a suitable pH of the gel, mechanically stronger granules are obtained which, under otherwise unchanged spray-drying conditions, are coarser and exhibit nor or hardly no abrasion or pulverization upon heating in a fluidized bed.

The silica gels according to the invention can be impregnated with a chromium compound by adding a solution of the chromium compound to the silica gel and removing the solvent by filtration and/or evaporation. Solutions of a chromium compound in water are often used, but when the chromium compound permits this it is advantageous to use solutions in organic solvents. The materials can also be mixed properly when in solid condition.

The silica gel impregnated with a chromium compound is subsequently heated in a way known per se at temperatures of 400—1000°C in a non-reducing atmosphere, preferably an oxygen-containing atmosphere, in order to activate the catalyst-on-carrier. Of this type of catalyst many embodiments are generally known. The activation temperature often is approximately 900°C, and therefore a suitable carrier is to be capable of withstanding such temperatures without damage being done, in particular without the pore volume being reduced, or being reduced to any appreciable extent, upon heating at 900°C. The subject carriers meet this requirement. The application of the chromium compound, if so desired together with other compounds, is sufficiently known in the art and will not be explained further here.

The subject process for the preparation of carriers suitable for such catalysts is very economic. By using the subject silica gels for the preparation of catalysts of the chromium-oxide-on-carrier type, catalysts can be prepared that can well be used for the preparation of polyolefins, particularly polyethylene with varying melt indices, by a suspension polymerisation process.

The invention will be elucidated by means of the following examples, without being restricted thereto.

Example 1

An amount of 500 g of Aerosil 380 is slowly added to 2830 ml of distilled water, the pH of which has been set at a value of 2 by addition of hydrochloric acid. While the Aerosil disperses slowly in the water the pH is kept at 2, for which purpose some drops of hydrochloric acid are to be added now and then. After all Aerosil has been added to the water, intensive homogenization is effected for 10 minutes. A rather thin gel is formed, which is allowed to age at 90°C for 20 hours. Upon cooling to room temperature a still xerogel is formed. An amount of 1200 ml ethanol (96 vol.%) is now added, whereupon the mixture is homogenized. A rather thin, thixotropic gel containing 28.6% of alcohol is formed, which is spray-dried in an IWK-spray-drying installation, through which 200 m$^3$ of air is passed through per hour, the inlet temperature of the air being 180°C and the outlet temperature 90°C.

The spray-dried silica has a pore volume, measured by the mercury penetration method, of 1.80 cm$^3$/g. After heating at 900°C this was 1.74 cm$^3$/g. The specific surface (BET surface) was 290 m$^2$/g, the average particle size 0.065 mm, and the uniformity factor n was 2.3.

Aerosil is a silicon dioxide marketed by Degussa that is prepared by flame hydrolysis. Aerosil 380 has a specific surface of 380 m$^2$/g. The average primary particle size is 8 nm.

Comparative Example A

Example 1 was repeated, but now 500 g of Aerosil 380 was dispersed in 4000 ml water (pH=2), and spray-drying was effected in the same way after 20 hours aging at 90°C.

The pore volume was 1.40 cm$^3$/g and did not change by heating at 900°C. The surface was 280 m$^2$/g.

Example 2

In the way described in Example 1, 500 g of Aerosil 200 V (specific surface 200 m$^2$/g, average primary particle size 16 nm) was processed into an alcohol-containing gel and subsequently spray-dried. The pore volume of the spray-dried product was 1.90 cm$^2$/g, and the surface 190 m$^2$/g. The average particle size was 0.075 mm and the uniformity coefficient n 2.85.

Comparative Example B

In the same way as described in Comparative Example A, 500 g of Aerosil 200 V was gelled in 4000 ml water and spray-dried. The pore volume of the spray-dried product was 1.6 cm$^3$/g, the specific surface 180 m$^2$/g.

Example 3

An amount of 45 g of chromium (III) acetylacetonate is dispersed in 120 ml dry heptane, which is meanwhile being stirred, then 98 ml pure triisobutylaluminium (TIBA) is added and the mixture is allowed to boil, reflux cooling being applied, until a dark solution has formed. An amount of 70 g of the silica obtained as described in Example 2 is first heated for 4 hours at a temperature of 180°C in a nitrogen atmosphere, and after cooling in the nitrogen atmosphere it is dispersed in 500 ml dry heptane. While the mixture is being stirred, 13.7 ml of the solution of the reaction product of chromium (III) acetylacetonate and triisobutylaluminium is added. The heptane is removed by evaporation and the silica, on which the complex chromium compound has precipitated, is heated for eight hours at 900°C in a flow of dry air, whereupon it is allowed to cool to room temperature.

The silica contains 0.52 wt.% of chromium.

Isobutane and triethyl boron (1 mg of boron per kg of isobutane) are introduced into 5 litre autoclave in amounts of 1.2 kg and 10.7 mg respectively and subsequently heated at 103°C. Ethylene and hydrogen are introduced under pressure into the autoclave until the ethylene pressure is 1000 kPa and the hydrogen pressure in the gas phase 800 kPa, and via a catalyst-metering system approximately 400 mg of catalyst is added. The temperature is kept at 103°C, and the ethylene pressure is kept constant by introducing more ethylene under pressure. After 90 minutes the polymerisation was terminated. The yield was 900 g of polyethylene. The polyethylene was analysed for the presence of silicon and was found to contain 400 mg of silica ($SiO_2$) per kg of polymer. The productivity therefore is 2500 g of polyethylene per gramme of catalyst. The melt index of the polyethylene, determined as per ASTM D-1238, is 3.2.

Comparative Example C

The polymerisation described in Example 3 was effected with catalyst prepared in the same way and with the silica of Comparative Example B as carrier.

The polyethylene contained 455 mg of silica, which corresponds to a productivity of 2200 g of polyethylene per gramme. The melt index of this polyethylene was only 1.2.

**Claims**

1. Process for the preparation of porous silicon dioxide by converting a silicon dioxide obtained by flame hydrolysis into a gel, using at least the same quantity by weight of water, and spray-drying this gel, this process being characterized in that the silica gel is mixed with at least 15 vol.% of an alcohol with 1—5 carbon atoms, calculated in relation to the volume of the water in the gel, and this mixture is spray-dried.

2. Process according to claim 1, characterized in that at least 20 vol.% of alcohol is mixed with the silica gel.

3. Process according to claims 1—2, characterized in that at most 100 vol.% of alcohol is mixed with the silica gel.

4. Process according to claim 3, characterized in that at most 50 vol.% of alcohol is mixed with the silica gel.

5. Process according to claims 1—4, characterized in that methanol or ethanol is used as alcohol.

6. Process according to claim 5, characterized in that ethanol is used as alcohol.

7. Process according to claims 1—6, characterized in that the pH of the gel is set at at most 4.

8. Process according to claim 7, characterized in that the pH of the gel is set at 1.5—3.

9. Process according to claim 8, characterized in that the pH of the gel is set at 2.5—3.

10. Process for the preparation of catalysts of the chromium-oxide-on-carrier type, characterized in that a silicon dioxide prepared according to any one of the claims 1—9 is used as carrier.

11. Process for the polymerisation of ethylene with a catalyst of the chromium-oxide-on-carrier type, characterized in that a catalyst prepared according to claim 10 is used.

**Patentansprüche**

1. Verfahren zur Herstellung von porösem Siliciumdioxid durch Umwandlung eines durch Flammenhydrolyse gewonnenen Siliciumdioxids in ein Gel, wobei mindestens die gleiche Gewichtsmenge Wasser verwendet wird, sowie Sprühtrocknung dieses Gels, dadurch gekennzeichnet, daß das Silikagel mit mindestens 15 Vol.-% eines Alkohols mit 1—5 Kohlenstoffatomen, berechnet im Verhältnis zum Volumen des Wassers im Gel vermischt wird und diese Mischung sprühgetrocknet wird.

2. Verfahren nach Anspruch 1, dadurch gekennzeichnet, daß mindestens 20 Vol.-% Alkohol mit dem Silikagel vermischt werden.

3. Verfahren nach den Ansprüchen 1—2, dadurch gekennzeichnet, daß höchstens 100 vol.-% Alkohol mit dem Silikagel vermischt werden.

4. Verfahren nach Anspruch 3, dadurch gekennzeichnet, daß höchstens 50 Vol.-% Alkohol mit dem Silikagel vermischt werden.

5. Verfahren nach den Ansprüchen 1—4, dadurch gekennzeichnet, daß Methanol oder Ethanol als Alkohol verwendet wird.

6. Verfahren nach Anspruch 5, dadurch gekennzeichnet, daß Ethanol als Alkohol verwendet wird.

7. Verfahren nach den Ansprüchen 1—6, dadurch gekennzeichnet, daß der pH-Wert des Gels auf höchstens 4 eingestellt wird.

8. Verfahren nach Anspruch 7, dadurch gekennzeichnet, daß der pH-Wert des Gels auf 1,5—3 eingestellt wird.

9. Verfahren nach Anspruch 8, dadurch gekennzeichnet, daß der pH-Wert des Gels auf 2,5—3 eingestellt wird.

10. Verfahren zur Herstellung von Katalysatoren des Chromoxid-auf-Träger-Typs, dadurch gekennzeichnet, daß ein Siliciumoxid, hergestellt nach einem der Ansprüche 1—9, als Träger verwendet wird.

11. Verfahren zur Polymerisation von Ethylen mit einem Katalysator des Chromoxid-auf-Träger-Tups, dadurch gekennzeichnet, daß ein Katalysator, hergestellt nach Anspruch 10, verwendet wird.

**Revendications**

1. Procédé de préparation de bioxyde de silicium poreux par conversion d'un bioxyde de silicium, préparé par hydrolyse à la flamme, en un gel, en utilisant au moins la même quantité en poids d'eau, et en séchant ce gel par pulvérisation, caractérisé en ce que le gel de silice est mélangé avec au moins 15% en volume d'un alcool ayant 1—5 atomes de carbone, calculé par rapport au volume d'eau se trouvant dans le gel, et que ce mélange est séché par pulvérisation.

2. Procédé selon la revendication 1, caractérisé en ce qu'au moins 20% en volume d'alcool sont mélangés avec le gel de silice.

3. Procédé selon l'une des revendications 1 et 2, caractérisé en ce que tout au plus 100% en volume d'alcool sont mélangés avec le gel de silice.

4. Procédé selon la revendication 3, caractérisé en ce que tout au plus 50% en volume d'alcool sont mélangés avec le gel de silice.

5. Procédé selon l'une quelconque des revendications 1 à 4, caractérisé en ce que du méthanol ou de l'éthanol est utilisé comme alcool.

6. Procédé selon la revendication 5, caractérisé en ce que de l'éthanol est utilisé comme alcool.

7. Procédé selon l'une quelconque des revendications 1 à 6, caractérisé en ce que le pH du gel est réglé à une valeur de 4 au maximum.

8. Procédé selon la revendication 7, caractérisé en ce que le pH du gel est réglé à une valeur de 1,5—3.

9. Procédé selon la revendication 8, caractérisé en ce que le pH du gel est réglé à une valeur de 2,5—3.

10. Procédé de préparation de catalyseurs du type oxyde de chrome sur support, caractérisé en ce qu'un bioxyde de silicium, préparé selon l'une quelconque des revendications 1 à 9, est utilisé comme support.

11. Procédé de polymérisation d'éthylène avec un catalyseur du type oxyde de chrome sur support, caractérisé en ce qu'on utilise un catalyseur préparé selon la revendication 10.